# EUROPEAN PATENT SPECIFICATION

(11) **EP 3 667 590 B1**
(45) Date of publication and mention of the grant of the patent: **24.04.2024**
(21) Application number: 19190450.7
(22) Date of filing: 07.08.2019
(51) Int. Cl.: G06Q 20/22, G06Q 20/32, G06Q 20/34, G06Q 20/36, G06Q 20/40

(54) **PAYMENT SYSTEM, MANAGEMENT SERVER, PAYMENT TERMINAL, AND METHOD OF CONTROLLING A PAYMENT TERMINAL**
ZAHLUNGSSYSTEM, VERWALTUNGSSERVER, BEZAHLUNGSENDGERÄT UND VERFAHREN ZUR STEUERUNG EINES BEZAHLUNGSENDGERÄTS
SYSTÈME DE PAIEMENT, SERVEUR DE GESTION, TERMINAL DE PAIEMENT ET PROCÉDÉ DE COMMANDE D'UN TERMINAL DE PAIEMENT

(30) Priority: 14.12.2018 JP 2018234419
(43) Date of publication of application: 17.06.2020
(73) Proprietor: Toshiba Tec Kabushiki Kaisha, 141-8562 Tokyo (JP)
(72) Inventor: MOGARI, Minoru, Shinagawa-ku,, Tokyo 141-8562 (JP)
(74) Representative: Bandpay & Greuter

(56) References cited:
- US-A1- 2018 189 767

## Description

### FIELD

An embodiment to be described here generally relates to a payment system, a management server and a payment terminal used in the system, and a method of controlling the payment terminal.

### BACKGROUND

Examples of a method of paying money for articles that a purchaser purchases or a service, i.e., a payment method, include methods using cash, cash vouchers, credit cards, electronic money, loyalty point cards, and the like. Credit cards are sorted into bank-affiliated credit cards, currency-affiliated credit cards, loan-affiliated credit cards, transportation-affiliated credit cards, and the like. Electronic money is sorted into currency-affiliated electronic money, transportation-affiliated electronic money, communication-provider-affiliated electronic money, and the like. Loyalty point cards are sorted into multi-store loyalty point cards and single-store loyalty point cards. With a multi-store loyalty point card, a purchaser may accumulate loyalty points with payment at member stores and pay fees with cumulative loyalty points. With a single-store loyalty point card, a purchaser can only accumulate loyalty points with payment at a certain store and pay fees with cumulative loyalty points only at the store. As described above, there are a variety of payment methods.

By the way, in many cases, it is necessary to specify a purchaser before payment with a credit card, electronic money, and a loyalty point card. According to a typical method, data recorded in a card medium such as an IC card or a magnetic card is read to specify a purchaser. Recently, in some cases, a purchaser is specified by using a mobile terminal such as a smartphone. However, in both the methods, if a purchaser does not have a card medium or a mobile terminal, the purchaser cannot use a payment method which requires to specify a purchaser.

There is known a method of specifying a purchaser by using physical characteristics such as a fingerprint or an iris. By using the physical characteristics, the problem that a purchaser should have a card medium or a mobile terminal may be solved. Document US2018/189767 Aldiscloses a payment terminal configured to execute payment processing in accordance with payment method data managed by a management server. In view of the aforementioned circumstances, conventionally, there is proposed a payment system that specifies a purchaser by using physical characteristics and subtracts the price corresponding to money to be paid from a bank account of the purchaser. However, conventionally, such a payment system enables only a limited payment method. So such a payment system is not appropriate for the today's variety of payment methods. It is desirable to improve such a payment system.

### SUMMARY OF INVENTION

To solve such problem, there is provided a payment system, comprising: a payment terminal configured to execute payment processing in accordance with a payment method of a purchaser; and a management server configured to manage payment method data for the payment processing, the payment terminal including a biometric information reader device configured to read biometric information of the purchaser, a first communication interface configured to communicate with the management server, and a first processor configured to obtain the biometric information of the purchaser read by the biometric information reader device, send an inquiry command including the obtained biometric information to the management server via the first communication interface, receive a response command from the management server in response to the inquiry command via the first communication interface, obtain payment method data including payment type data for specifying the payment method of the purchaser, the payment method data being included in the response command, and execute the payment processing in accordance with the payment method specified by the payment type data included in the obtained payment method data, the management server including a first database configured to store the payment method data in association with the biometric information of the purchaser, a second communication interface configured to communicate with the payment terminal, and a second processor configured to search, where the second processor receives the inquiry command from the payment terminal via the second communication interface, the first database by using, as search data, the biometric information of the purchaser included in the inquiry command, detect, as a result of searching the first database, the payment method data in association with the biometric information of the purchaser included in the inquiry command from the payment terminal, and send the response command to the payment terminal via the second communication interface, the response command including the detected payment method data.

The inquiry command further includes terminal identifier information identifying the payment terminal, the management server further includes a second database configured to store the payment type data linked to the terminal identifier information, and the second processor is configured to search the second database by using, as search data, the terminal identifier information included in the inquiry command, detect, as a search result of searching the second database, the payment type data linked to the terminal identifier information included in the inquiry command, and detect, from the payment method data detected as the result of searching the first database, payment method data including payment type data coincident with payment type data detected as the search result of searching the second database.

Preferably still, the second processor is configured to send, where the second processor detects, from the payment method data detected as the result of searching the first database, a plurality of payment method data including the payment type data detected as the search result of searching the second database, the response command to the payment terminal via the second communication interface, the response command including the plurality of detected payment method data, and the first processor is configured to, where the first processor obtains the plurality of payment method data included in the response command, select one payment method data from the plurality of obtained payment method data, and execute the payment processing in accordance with a payment method specified by the payment type data included in the selected payment method data.

The invention also relates to a payment terminal configured to execute payment processing in accordance with payment method data managed by a management server, the payment terminal comprising: a biometric information reader device configured to read biometric information of a purchaser; a communication interface configured to communicate with the management server; and a processor configured to obtain the biometric information of the purchaser read by the biometric information reader device, send an inquiry command including the obtained biometric information to the management server via the communication interface, receive a response command from the management server in response to the inquiry command via the communication interface, obtain payment method data including payment type data for specifying the payment method of the purchaser, the payment method data being included in the response command, and execute the payment processing in accordance with the payment method specified by the payment type data included in the obtained payment method data.

Preferably, the processor is configured to, where the processor obtains a plurality of payment method data in the response command, select one payment method data from the plurality of obtained payment method data, and execute the payment processing in accordance with a payment method specified by the payment type data included in the one selected payment method data.

The invention also concerns a management server configured to manage payment method data for payment processing executed by a payment terminal, the payment terminal including a biometric information reader device configured to read biometric information of a purchaser, the management server comprising: a first database configured to store the payment method data in association with the biometric information of the purchaser; a communication interface configured to communicate with the payment terminal; and a processor configured to search, where the processor receives an inquiry command from the payment terminal via the communication interface, the first database by using, as search data, the biometric information of the purchaser included in the inquiry command, detect, as a result of searching the first database, the payment method data in association with the biometric information of the purchaser included in the inquiry command from the payment terminal, and send the response command to the payment terminal via the communication interface, the response command including the detected payment method data.

The inquiry command further includes terminal identifier information identifying the payment terminal, the management server further includes a second database configured to store the payment type data linked to the terminal identifier information, and the processor is configured to search the second database by using, as search data, the terminal identifier information included in the inquiry command, detect the payment type data linked to the terminal identifier information included in the inquiry command as a search result of searching the second database, and detect, from the payment method data detected as the result of searching the first database, payment method data including payment type data detected as the search result of searching the second database.

Preferably still, the processor is configured to send, where the processor detects, from the payment method data detected as the result of searching the first database, a plurality of payment method data including the payment type data detected as the search result of searching the second database, the response command to the payment terminal via the second communication interface, the response command including the plurality of detected payment method data.

The invention further relates to a method for controlling a payment terminal configured to execute payment processing in accordance with payment method data managed by a management server, the method comprising the steps of reading biometric information of a purchaser; communicating with the management server; and obtaining the biometric information of the purchaser read in the reading step, sending an inquiry command including the obtained biometric information to the management server via the communication interface, receiving a response command from the management server in response to the inquiry command via the communication interface, obtaining payment method data including payment type data for specifying the payment method of the purchaser, the payment method data being included in the response command, and executing the payment processing in accordance with the payment method specified by the payment type data included in the obtained payment method data.

Preferably, the method further comprises the steps of where obtaining a plurality of payment method data in the response command in the obtaining payment method data step, selecting one payment method data from the plurality of obtained payment method data, and executing the payment processing in accordance with a payment method specified by the payment type data included in the one selected payment method data.

The invention further concerns a computer program comprising instructions which, when the program is executed by a computer, cause the computer to carry out the steps of the method described above.

The invention also relates to a computer-readable medium having stored thereon the computer program described above.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram schematically showing a configuration of the payment system of the present embodiment.
Fig. 2 is a diagram schematically showing a main data structure of a purchaser record stored in a purchaser database managed by a management server included in the payment system of the present embodiment.
Fig. 3 is a diagram schematically showing a main data structure of a store record stored in a store database managed by the management server of the present embodiment.
Fig. 4 is a block diagram showing a main circuit configuration of the management server of the present embodiment.
Fig. 5 is a block diagram showing a main circuit configuration of a payment terminal included in the payment system of the present embodiment.
Fig. 6 is a flowchart showing a main information processing that a processor of the payment terminal of the present embodiment executes.
Fig. 7 is a flowchart showing a main information processing that a processor of the management server of the present embodiment executes.
Fig. 8 is a diagram schematically showing an example of a payment selection screen displayed by the payment terminal of the present embodiment.

### DETAILED DESCRIPTION

According to one embodiment, a payment system includes a payment terminal and a management server. The payment terminal is configured to execute payment processing in accordance with a payment method of a purchaser. The management server is configured to manage payment method data for the payment processing. The payment terminal is as defined in independent claim 1.

The management server is as defined in claim 3.

Hereinafter, with reference to the drawings, a payment system according to an embodiment will be described. The payment system can support a variety of payment methods while specifying a purchaser by using physical characteristics. In the drawings, the same reference symbols denote the same or similar parts. Note that a purchaser means a person who pays money for articles that the purchaser purchases or a service at a store. In other words, a purchaser is generally referred to as a consumer, a customer, a user who uses a facility, or the like. A store is not necessarily a retail store. Examples of a store include facilities such as a training facility, a movie theater, a museum, or a sports arena, which collect use fees or entrance fees.

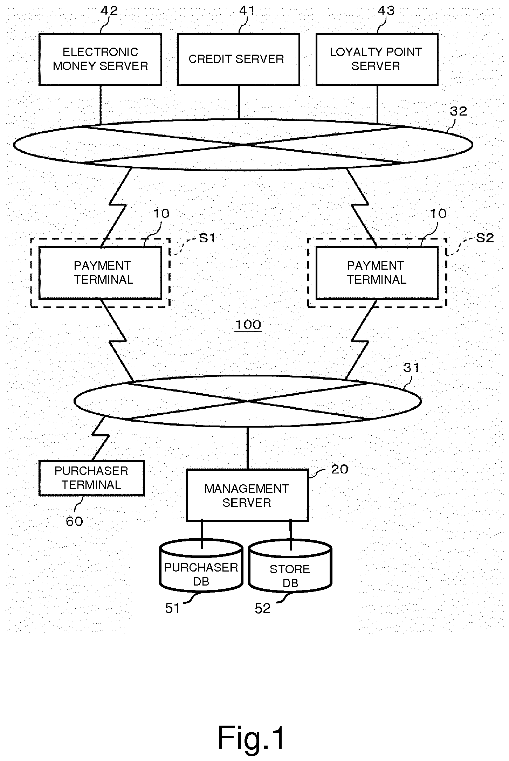

Fig. 1 is a block diagram schematically showing a configuration of the payment system 100 of the present embodiment. The payment system 100 is a system that enables payment with a credit card, electronic money, or a loyalty point card by specifying a purchaser on the basis of biometric information. Examples of biometric information includes a fingerprint, an iris, a retina, veins, a face, and the like. In the present embodiment, a fingerprint is used.

The payment system 100 includes the payment terminals 10 provided in the stores S1 and S2, respectively, the management server 20, and the first network 31. The first network 31 connects the payment terminals 10 of the stores S1 and S2 and the management server 20 such that each payment terminal 10 and the management server 20 are capable of communicating with each other bi-directionally. The first network 31 is, typically, the Internet. The first network 31 may alternatively be a local area network dedicated to the payment system 100. The first network 31 may include a mobile communication network.

The payment terminal 10 is an information processing terminal that is used when a purchaser pays money for articles that the purchaser purchases or a service at the store S1 or S2. The payment terminal 10 may be a face-to-face payment terminal operated by a salesclerk. The payment terminal 10 may be a self-service or semi-self-service payment terminal operated by a purchaser.

The payment terminal 10 supports payment methods with cash, cash vouchers, credit cards, electronic money, and loyalty point cards. Further, the payment terminal 10 supports various credit cards such as bank-affiliated credit cards, currency-affiliated credit cards, loan-affiliated credit cards, or transportation-affiliated credit cards. The payment terminal 10 supports various electronic money such as currency-affiliated electronic money, transportation-affiliated electronic money, or communication-provider-affiliated electronic money. Note that the payment terminal 10 supports electronic money that employs a system in which a user's electronic money balance is managed by the electronic money server 42 (described later). The payment terminal 10 supports multi-store loyalty point cards and single-store loyalty point cards. Note that the payment terminal 10 supports loyalty point cards that employ a system in which a user's cumulative loyalty points are managed by the loyalty point server 43 (described later).

The payment terminal 10 connects to the credit server 41, the electronic money server 42, and the loyalty point server 43 via the second network 32 so as to support payment methods with credit cards, electronic money, and loyalty point cards. The second network 32 is, typically, the Internet. The second network 32 may alternatively be a dedicated local area network. The second network 32 may include a mobile communication network.

The credit server 41 is a computer that assists credit card payment at the stores S1 and S2. The credit server 41 manages information of credit card users. The credit server 41 receives credit card information and payment information from the payment terminal 10. The payment information includes information such as payment price or the number of payments. Further, the credit server 41 executes processing about credit card payment to a purchaser, i.e., a credit card user specified by credit card information. Further, the credit server 41 returns the result of execution to the payment terminal 10.

The electronic money server 42 is a computer that assists electronic money payment at the stores S1 and S2. The electronic money server 42 manages information about electronic money balance and the like of of electronic money users. The electronic money server 42 receives electronic money information and payment price from the payment terminal 10. Further, the electronic money server 42 executes processing of subtracting payment price from the electronic money balance of a purchaser, i.e., an electronic money user specified by electronic money information. Further, the electronic money server 42 returns the result to the payment terminal 10.

The loyalty point server 43 is a server that assists loyalty point card payment at the stores S1 and S2, and assists loyalty point rewards. The loyalty point server 43 manages information about cumulative loyalty points and the like of loyalty point card users. The loyalty point server 43 receives loyalty point card information and payment price from the payment terminal 10. Further, the loyalty point server 43 executes processing of subtracting loyalty points corresponding to payment price from cumulative loyalty points of a purchaser, i.e., a loyalty point card user specified by loyalty point card information. Further, the loyalty point server 43 returns the result to the payment terminal 10. Further, the loyalty point server 43 receives loyalty point card information and loyalty point rewards from the payment terminal 10. Further, the loyalty point server 43 executes processing of adding loyalty point rewards to cumulative loyalty points of loyalty point card users.

Note that Fig. 1 shows the one credit server 41, the one electronic money server 42, and the one loyalty point server 43. However, the number of the credit server 41, the number of the electronic money server 42, and the number of the loyalty point server 43 are not limited. For example, there are credit servers 41 for different kinds of credit cards. The same applies to the electronic money server 42 and the loyalty point server 43.

The management server 20 manages the purchaser database 51 and the store database 52. A built-in storage device of the management server 20 may store the databases 51 and 52. Alternatively, an external storage device connected to the management server 20 may store the databases 51 and 52.

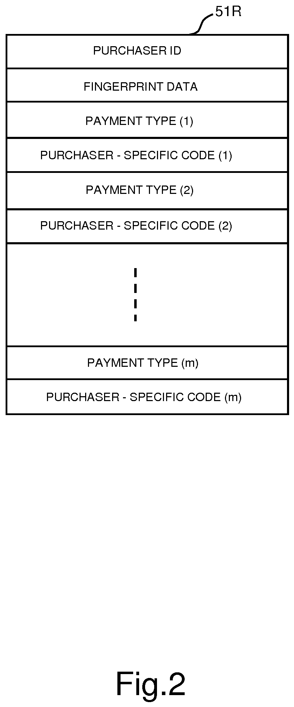

The purchaser database 51 is a group of the purchaser records 51R, each of which is created for each purchaser. Fig. 2 is a diagram schematically showing a main data structure of the purchaser record 51R. As shown in Fig. 2, the purchaser record 51R includes a purchaser ID, fingerprint data (biometric information of purchaser), and payment method data. The payment method data is data pair of payment type data and a purchaser-specific code. In other words, the payment method data includes payment type data (payment type of Fig. 2) and a purchaser-specific code.

The purchaser ID is a unique code assigned to each purchaser and identifies each purchaser. It is necessary for a purchaser who executes payment by using the payment system 100 to previously execute user registration. User registration is executed via the purchaser terminal 60 capable of connecting to the first network 31 wiredly or wirelessly. The purchaser terminal 60 may be a communication terminal such as a personal computer, a smartphone, or a tablet terminal that each purchaser has. Alternatively, a computer terminal provided at each of the stores S1 and S2 may be used as the purchaser terminal 60. A unique purchaser ID is issued when a purchaser executes user registration by using the purchaser terminal 60. Further, the purchaser record 51R including the purchaser ID is generated, and is stored in the purchaser database 51.

The fingerprint data is information obtained by reading a fingerprint of a purchaser. The purchaser, who has executed user registration, registers the purchaser's fingerprint in the management server 20. Note that the purchaser registers a fingerprint of an arbitrary finger. A fingerprint is registered via the purchaser terminal 60. The management server 20 sets the fingerprint data of the purchaser, which is registered via the purchaser terminal 60, in the purchaser record 51R in which the purchaser ID of the purchaser is described.

The payment type data (payment type of Fig. 2) is data that specifies a kind of a payment method, which is required to specify a purchaser. In the following description, payment type data will be simply referred to as payment type. In other words, the payment type for credit card payment is information specifying the kind of a credit card. The payment type for electronic money payment is information specifying the kind of the electronic money. The payment type for loyalty point cards is information specifying the kind of a loyalty point card.

The purchaser-specific code is a unique code assigned to a purchaser who uses a payment method of a corresponding payment type. In other words, where the payment method is a credit card, the purchaser-specific code is the card number of a credit card. Where the payment method is electronic money, the purchaser-specific code is the electronic money user code in association with electronic money balance of the purchaser. Where the payment method is a loyalty point card, the purchaser-specific code is the card number of a loyalty point card, which is in association with cumulative loyalty points of the purchaser.

If a purchaser has a chance to use a credit card for payment at the stores S1 and S2, the purchaser preregisters the payment type of the credit card and the purchaser-specific code in the management server 20. If a purchaser has a chance to use electronic money for payment at the stores S1 and S2, the purchaser preregisters the payment type of the electronic money and the purchaser-specific code in the management server 20. If a purchaser has a chance to use a loyalty point card for payment at the stores S1 and S2, the purchaser preregisters the payment type of the loyalty point card and the purchaser-specific code in the management server 20. The purchaser registers the payment type and the purchaser-specific code via the purchaser terminal 60. The management server 20 sets the payment method data (data pair of payment type and purchaser-specific code) registered via the purchaser terminal 60 in the purchaser record 51R in which the purchaser ID of the purchaser is described.

A purchaser collectively registers credit cards, electronic money, and loyalty point cards that the purchaser has a chance to use for payment. Therefore the number (m) of the payment method data (data pair of payment type and purchaser-specific code) set in one purchaser record 51R depends on a purchaser.

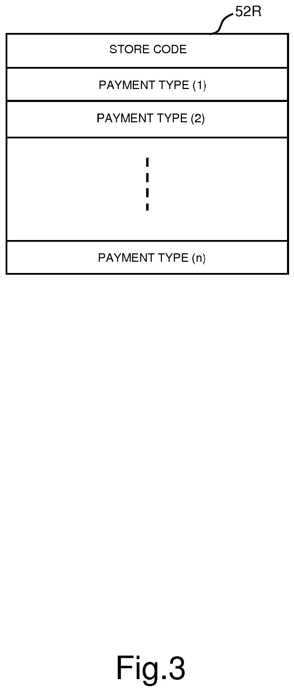

The store database 52 is a group of the store records 52R created for each of the stores S1 and S2. Fig. 3 is a diagram schematically showing a main data structure of the store record 52R. As shown in Fig. 3, the store record 52R includes a store code and payment types. The store code is a unique code assigned to each store, and individually identifies each of the stores S1 and S2 that join the payment system 100. Further, the store code is information identifying the payment terminal 10 provided in each of the stores S1 and S2. In other words, the store S1 or S2, in which the payment terminal 10 is provided, is identified by the store code. The payment type is payment method data for specifying a payment method of a purchaser. In other words, the payment type is information indicating a payment method acceptable at each of the stores S1 and S2 out of payment methods which require to specify a purchaser.

Each of the stores S1 and S2 registers the payment types of payment methods acceptable at the store itself in the management server 20. A computer terminal provided at each of the stores S1 and S2 may be used to register the payment types. The number of payment methods acceptable at each of the stores S1 and S2 is not especially limited. Therefore the number (n) of payment types set in one store record 52R depends on each of the stores S1 and S2.

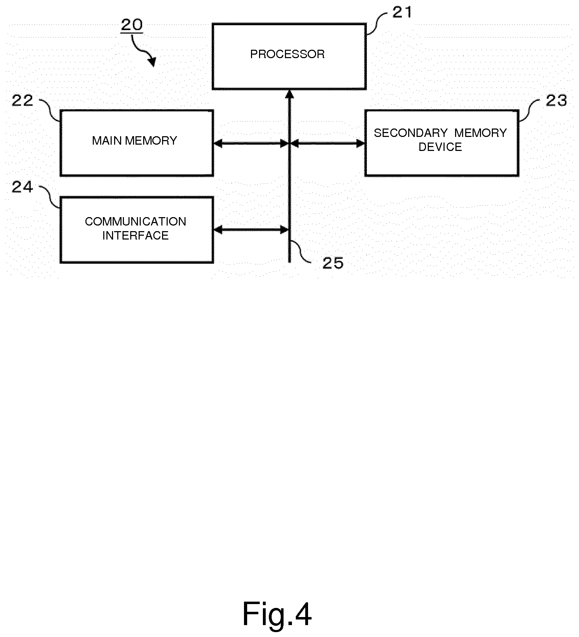

Fig. 4 is a block diagram showing a main circuit configuration of the management server 20. The management server 20 includes the processor 21, the main memory 22, the secondary memory device 23, the communication interface 24, and the system bus 25. The system bus 25 includes an address bus, a data bus, control signal wiring, and the like. In the management server 20, the processor 21, the main memory 22, the secondary memory device 23, and the communication interface 24 are connected to the system bus 25. The management server 20 includes a computer including the processor 21, the main memory 22, the secondary memory device 23, and the system bus 25 connecting them each other.

The processor 21 functions as a central unit of the computer. The processor 21 executes an operating system or an application program to control the respective units to realize various functions of the management server 20. The processor 21 is, for example, a CPU (Central Processing Unit).

The main memory 22 functions as a primary memory unit of the computer. The main memory 22 includes a nonvolatile memory area and a volatile memory area. The main memory 22 stores the operating system or the application program in the nonvolatile memory area. The main memory 22 may store data, which are necessary to execute processing for controlling the respective units by the processor 21, in the nonvolatile or the volatile memory area. The main memory 22 uses the volatile memory area as a work area, in which data is appropriately rewritten by the processor 21. The nonvolatile memory area is, for example, a ROM (Read Only Memory). The volatile memory area is, for example, a RAM (Random Access Memory).

The secondary memory device 23 functions as a secondary memory unit of the computer. The secondary memory device 23 is a device such as, for example, an EEPROM (Electric Erasable Programmable Read-Only Memory), an HDD (Hard Disc Drive), or an SSD (Solid State Drive). The secondary memory device 23 stores data, which the processor 21 uses to execute various processing, or data created by the processor 21 during the processing. The secondary memory device 23 may store the application program.

The communication interface 24 sends and receives data to and from the respective units connected via the first network 31 in accordance with a communication protocol.

The management server 20 having such a configuration may employ, for example, a server that supplies computer resources as cloud computing.

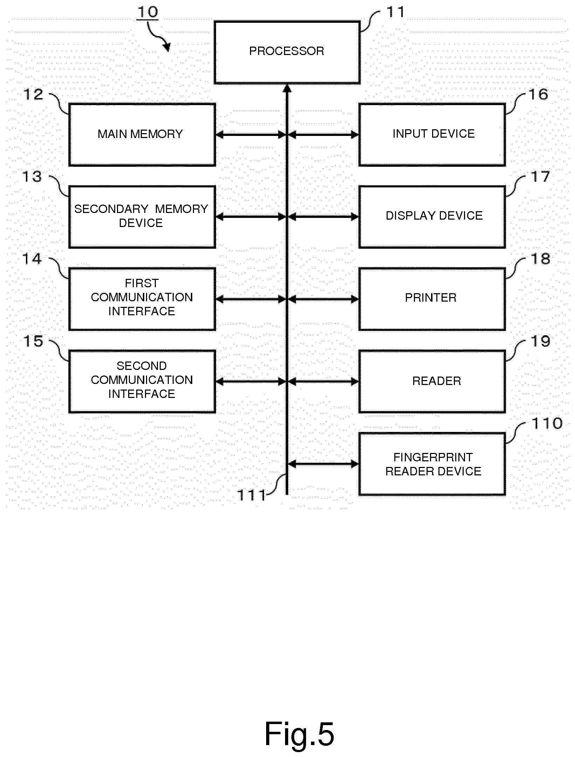

Fig. 5 is a block diagram showing a main circuit configuration of the payment terminal 10. As shown in Fig. 5, the payment terminal 10 includes the processor 11, the main memory 12, the secondary memory device 13, the first communication interface 14, the second communication interface 15, the input device 16, the display device 17, the printer 18, the reader 19, the fingerprint reader device 110 (biometric information reader device), and the system bus 111. The system bus 111 includes an address bus, a data bus, control signal wiring, and the like. In the payment terminal 10, the processor 11, the main memory 12, the secondary memory device 13, the first communication interface 14, the second communication interface 15, the input device 16, the display device 17, the printer 18, the reader 19, and the fingerprint reader device 110 are connected to the system bus 111. The payment terminal 10 includes a computer including the processor 11, the main memory 12, the secondary memory device 13, and the system bus 111 connecting them each other.

The processor 11 functions as a central unit of the computer. The processor 11 executes an operating system or an application program to control the respective units to realize various functions of the payment terminal 10. The processor 11 is, for example, a CPU.

The main memory 12 functions as a primary memory unit of the computer. The main memory 12 includes a nonvolatile memory area and a volatile memory area. The main memory 12 stores the operating system or the application program in the nonvolatile memory area. The main memory 12 may store data, which are necessary to execute processing for controlling the respective units by the processor 11, in the nonvolatile or the volatile memory area. The main memory 12 uses the volatile memory area as a work area, in which data is appropriately rewritten by the processor 11. The nonvolatile memory area is, for example, a ROM. The volatile memory area is, for example, a RAM.

The secondary memory device 13 functions as a secondary memory unit of the computer. The secondary memory device 13 is a device such as, for example, an EEPROM, an HDD, or an SSD. The secondary memory device 13 stores data, which the processor 11 uses to execute various processing, or data created by the processor 11 during the processing. The secondary memory device 13 may store the application program.

The first communication interface 14 sends and receives data to and from the respective units connected via the first network 31 in accordance with a communication protocol. The second communication interface 15 sends and receives data to and from the respective units connected via the second network 32 in accordance with a communication protocol.

The input device 16 inputs data about payment. The input device 16 includes, for example, a keyboard, scanner, and the like. The display device 17 displays data about payment. The display device 17 is a device such as, for example, a liquid crystal display or an organic EL (electroluminescence) display. The payment terminal 10 may include a touch panel as a device that functions as both the input device 16 and the display device 17.

The printer 18 prints data about payment on a receipt sheet, and issues a receipt or a credit sales slip. The printer 18 is a device such as a thermal printer or an ink jet printer.

The reader 19 reads data recorded in a card medium, a smartphone, or the like. The reader 19 is a device such as an IC card reader, an RFID (Radio Frequency Identification) reader, or a near field wireless communication unit.

the fingerprint reader device 110 is a device for reading a fingerprint of a purchaser. Further, for example, where an iris is used as biometric information, an iris authentication device is used instead of the fingerprint reader device 110.

The payment terminal 10 having such a configuration may employ, for example, a known payment terminal such as a POS (Point Of Sales) terminal or a self-service POS terminal with the fingerprint reader device 110.

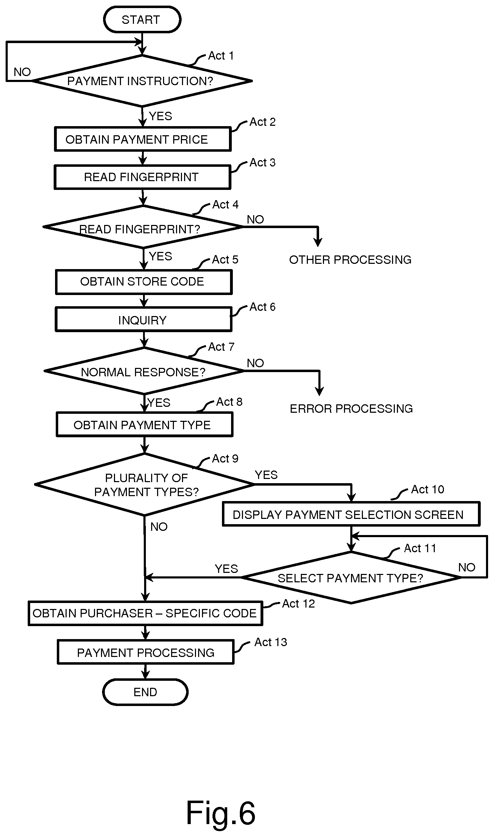

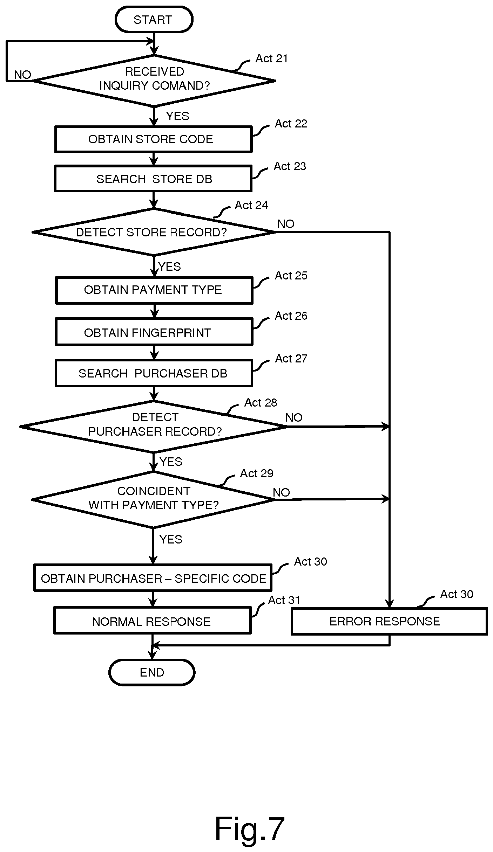

Fig. 6 is a flowchart showing a main information processing that the processor 11 of the payment terminal 10 executes. The processor 11 executes a terminal control program, which is stored in the main memory 12 or the secondary memory device 13, to execute the information processing. Fig. 7 is a flowchart showing a main information processing that the processor 21 of the management server 20 executes in response to the processing of the processor 11. The processor 21 executes a server control program, which is stored in the main memory 22 or the secondary memory device 23, to execute the information processing.

Hereinafter, the operations of the payment terminal 10 and the management server 20 will be described with reference to the drawings. Note that the following description is an example. The information processing procedure is not limited as long as a similar result is obtained.

In Fig. 6, in Act 1, the processor 11 of the payment terminal 10 stands by for a payment instruction. The payment instruction is a declaration instruction of end of registration of articles that a purchaser purchases. Alternatively, the payment instruction is a declaration instruction of collection of a use fee or an entrance fee that a purchaser pays to a facility. The payment instruction is input via the input device 16, which is operated by a purchaser or a salesclerk.

Where the processor 11 determines that a payment instruction is received (Act 1, YES), the processing of the processor 11 proceeds to Act 2. In Act 2, the processor 11 obtains a payment price. If the processor 11 receives input of a declaration instruction of end of registration of articles that a purchaser purchases as a payment instruction, the payment price is the total price of the articles to be purchased. If the processor 11 receives input of a declaration instruction of collection of a use fee or an entrance fee that a purchaser pays to a facility as a payment instruction, the payment price is the price of the use fee or the entrance fee.

In Act 3, the processor 11 controls the fingerprint reader device 110 to read a fingerprint. At this time, the processor 11 displays, for example, a message such as "Start reading fingerprint if purchaser proceeds to payment with fingerprint authentication" on the display device 17. A salesclerk confirms the displayed message, and instructs the purchaser to start reading a fingerprint with the fingerprint reader device 110. In reply to the instruction of the salesclerk, the purchaser puts the purchaser's fingerprint on the fingerprint reader device 110 such that the fingerprint reader device 110 reads the fingerprint. Alternatively, a purchaser confirms the message, and the purchaser puts the purchaser's fingerprint on the fingerprint reader device 110 such that the fingerprint reader device 110 reads the fingerprint.

In Act 4, the processor 11 determines whether or not fingerprint data, which is read by the fingerprint reader device 110 within a predetermined time period, is obtained. If the processor 11 cannot obtain fingerprint data, which is read by the fingerprint reader device 110 within the predetermined time period (Act 4, NO) the processor 11 executes other processing. The other processing is payment processing that does not use the fingerprint authentication. For example, an example of the other processing is payment processing with cash or a cash voucher. In other words, if a purchaser would like to purchase articles or pay money for a service with cash or a cash voucher, it is only necessary for the purchaser to pay with cash or a cash voucher without putting a fingerprint for reading.

If the processor 11 obtains fingerprint data, which is read by the fingerprint reader device 110 within the predetermined time period (Act 4, YES), the processing of the processor 11 proceeds to Act 5. In Act 5, the processor 11 obtains a store code. The store code is prestored in the main memory 12 or the secondary memory device 13, which is a storage device.

After completion of the processing of Act 1 to Act 5, in Act 6, the processor 11 inquires of the management server 20 as to payment. Specifically, the processor 11 controls the first communication interface 14 to send an inquiry command. Controlled by the processor 11, the first communication interface 14 generates an inquiry command, and sends the inquiry command to the management server 20 via the first network 31. The inquiry command includes the fingerprint data (biometric information of purchaser) obtained in Act 3 and the store code obtained in Act 5. The store code is, as described above, information identifying the payment terminal 10.

In Fig. 7, in Act 21, the processor 21 of the management server 20 stands by for an inquiry command. Further, if the processor 21 determines that the processor 21 receives the inquiry command from the payment terminal 10 via the communication interface 24 (Act 21, YES), the processing of the processor 21 proceeds to Act 22. In Act 22, the processor 21 obtains the store code from the inquiry command. Further, in Act 23, the processor 21 searches the store database 52 by using, as search data, the store code (store code obtained in Act 22). Next, in Act 23, the processor 21 determines whether or not the processor 21 detects the store record 52R, in which the store code coincident with the store code as the search data is set, as the search result of the aforementioned Act 23. If the processor 21 detects the store record 52R, in which the store code coincident with the store code as the search data is set, in the store database 52 (Act 24, YES), the processing of the processor 21 proceeds to Act 25. In Act 25, the processor 21 obtains all the payment types set in the detected store record 52R.

Next, in Act 26, the processor 21 obtains fingerprint data from the inquiry command. Further, in Act 27, the processor 21 searches the purchaser database 51 by using, as search data, the fingerprint data. In Act 28, the processor 21 determines whether or not the processor 21 detects the purchaser record 51R, in which the fingerprint data coincident with the fingerprint data as the search data is set, as the search result of the aforementioned Act 27. If the processor 21 detects the purchaser record 51R, in which the fingerprint data coincident with the fingerprint data as the search data is set (Act 28, YES), the processing of the processor 21 proceeds to Act 29. In Act 29, the processor 21 determines whether or not the payment types set in the detected purchaser record 51R include a payment type coincident with the payment type obtained in Act 25. If the processor 21 confirms that the payment types set in the detected purchaser record 51R include the payment type obtained in Act 25 (Act 29, YES), the processing of the processor 21 proceeds to Act 30. In Act 30, the processor 21 obtains a purchaser-specific code from the payment method data, which includes the payment type obtained in Act 25, from the purchaser record 51R. At this time, if the payment types set in the purchaser record 51R include a plurality of payment types obtained in Act 25, the processor 21 obtains all the purchaser-specific codes from the payment method data including the respective payment types.

After completion of the processing of Act 30, in Act 31, the processor 21 controls the communication interface 24 to send a normal response command to, as the destination, the payment terminal 10 which has sent the inquiry command. Controlled by the processor 21, the communication interface 24 generates a normal response command, and sends the normal response command to the payment terminal 10 which has sent the inquiry command via the first network 31. The normal response command includes all the purchaser-specific codes obtained in Act 30 and payment types, which form pairs with the purchaser-specific codes. In other words, the normal response command includes payment method data including all the purchaser-specific codes obtained in Act 30.

Meanwhile, if the processor 21 does not detect the store record 52R, in which the store code coincident with the store code obtained in Act 22 is set, in the store database 52, as the search result of the aforementioned Act 23 (Act 24, NO), the processing of the processor 21 proceeds to Act 32. Similarly, if the processor 21 does not detect the store record 52R, in which the fingerprint data coincident with the fingerprint data obtained in Act 26 is set, in the purchaser database 51, as the search result of the aforementioned Act 27 (Act 28, NO), the processing of the processor 21 proceeds to Act 32. Further, if the processor 21 detects the store record 52R, in which the fingerprint data obtained in Act 26 is set (Act 28, YES), but the processor 21 confirms that the purchaser record 51R includes no payment type obtained in Act 25 (Act 29, NO), the processing of the processor 21 proceeds to Act 32.

In Act 32, the processor 21 controls the communication interface 24 to send an error response command to, as the destination, the payment terminal 10 which has sent the inquiry command, as Act 32. Controlled by the processor 21, the communication interface 24 generates an error response command, and sends the error response command to the payment terminal 10 which has sent the inquiry command via the first network 31.

After the processor 21 controls the communication interface 24 to send the normal response command or the error response command, the processing of receiving the inquiry command is finished.

Description will be made with reference to Fig. 6 again. After controlling the first communication interface 14 to send the inquiry command in Act 6, in Act 7, the processor 11 of the payment terminal 10 stands by for a response command from the management server 20. In other words, the processor 11 determines whether the processor 11 receives a normal response command or an error response command via the first communication interface 14. Further, if the processor 11 determines that the processor 11 receives an error response command via the first communication interface 14 (Act 7, NO), the processor 11 executes error processing. The error processing is, for example, processing of displaying a message, which informs the purchaser that fingerprint authentication payment is error, on the display device 17. The purchaser confirms the message, and purchases articles or pays money for a service with cash or a cash voucher, for example.

If the processor 11 determines that the processor 11 receives the normal response command via the first communication interface 14 (Act 7, YES), the processing of the processor 11 proceeds to Act 8. In Act 8, the processor 11 obtains a payment type from the payment method data included in the received normal response command.

Next, in Act 9, the processor 11 confirms whether or not a plurality of payment types is obtained from the normal response command. It the processor 11 confirms that the number of the payment type obtained from the normal response command is one (Act 9, NO), the processing of the processor 11 proceeds to Act 12. In Act 12, the processor 11 obtains the purchaser-specific code, which is included in the payment method data of the normal response command together with the one payment type confirmed.

If the processor 11 confirms that the processor 11 obtains a plurality of payment types from the normal response command (Act 9, YES), the processing of the processor 11 proceeds to Act 10. In Act 10, the processor 11 displays, on the display device 17, the payment selection screen SC1 for selecting one payment type from the plurality of payment types. Further, in Act 11, the processor 11 stands by for selection of one payment type on the payment selection screen SC1. In other words, the processor 11 determines one payment type selected on the payment selection screen SC1.

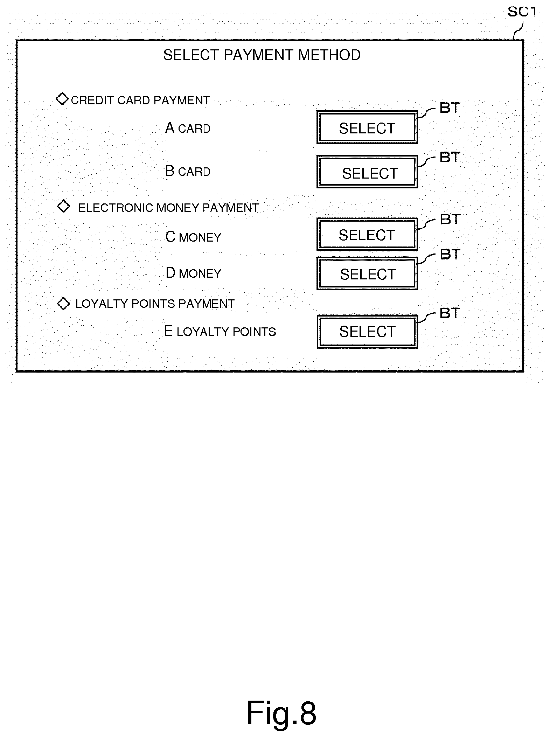

Fig. 8 is a diagram schematically showing an example of the payment selection screen SC1. The screen SC1 is an example of a screen, which allows to select one of the payment types "A card", "B card", "C money", "D money", and "E loyalty points". Each of the payment types "A card" and "B card" has a credit card attribute, each of the payment types "C money" and "D money" has an electronic money attribute, and the payment type "E loyalty points" has a loyalty point card attribute. The select button BT is displayed for each payment type. The purchaser confirms the payment selection screen SC1, and decides a payment type to be used to pay money. Further, the purchaser or a salesclerk touches and operates the select button BT on the payment selection screen SC1 corresponding to the payment type that the purchaser decides in order to select the payment type.

The processor 11 detects one select button BT operated on the payment selection screen SC1, and thereby determines that the payment type corresponding to the select button BT is selected. Further, if the processor 11 determines that one payment type is selected (Act 11, YES), the processing of the processor 11 proceeds to Act 12. In Act 12, as described above, the processor 11 obtains the purchaser-specific code, which is included in the payment method data of the normal response command together with the selected payment type.

If, in Act 12, the processor 11 obtains the purchaser-specific code, the processing of the processor 11 proceeds to Act 13. In Act 13, the processor 11 executes payment processing on the basis of the purchaser-specific code. If, for example, the purchaser-specific code is a purchaser-specific code, which forms a pair with the payment type of a credit card in payment method data, the processor 11 controls the second communication interface 15 to send the purchaser-specific code and the payment price to the corresponding credit server 41. If the purchaser-specific code is a purchaser-specific code, which forms a pair with the payment type of electronic money in payment method data, the processor 11 controls the second communication interface 15 to send the purchaser-specific code and the payment price to the corresponding electronic money server 42. If the purchaser-specific code is a purchaser-specific code, which forms a pair with the payment type of a loyalty point card in payment method data, the processor 11 controls the second communication interface 15 to send the purchaser-specific code and the payment price to the corresponding loyalty point server 43. Controlled by the processor 11, the second communication interface 15 sends the purchaser-specific code and the payment price to the corresponding credit server 41, the corresponding electronic money server 42, or the corresponding loyalty point server 43.

As a result, in the payment terminal 10, payment processing with a credit card, electronic money, or a loyalty point card of a purchaser specified by a fingerprint is executed in cooperation with the credit server 41, the electronic money server 42, or the loyalty point server 43. Then the processor 11 completes the processing in response to the received payment instruction.

Here, the processor 11 of the payment terminal 10 executes the processing of Act 3 of Fig. 6 in cooperation with the fingerprint reader device 110 to thereby operate as a first obtaining means for obtaining biometric information of a purchaser. Further, the processor 11 executes the processing of Act 6 in cooperation with the first communication interface 14 to thereby operate as an inquiry means for inquiring of the management server 20 on the basis of the biometric information obtained by the first obtaining means. Further, the processor 11 executes the processing of Act 8 to Act 12 in cooperation with the first communication interface 14 to thereby operate as a second obtaining means for obtaining payment method data specifying a payment method of the purchaser, which is returned from the management server 20 in response to the inquiry from the inquiry means. The payment method data is data including a payment type and a purchaser-specific code. Further, the processor 11 executes the processing of Act 13 in cooperation with the second communication interface 15 to thereby operate as a processing means for executing payment processing by using the payment method on the basis of the payment method data obtained by the second obtaining means.

Meanwhile, the processor 21 of the management server 20 executes the processing of Act 21 to Act 30 of Fig. 7 to thereby operate as a detection means for searching the purchaser database 51, which stores payment method data specifying a payment method in association with biometric information of a purchaser, i.e., fingerprint data, and detecting payment method data in association with fingerprint data, which is inquired by the payment terminal 10. Further, the processor 21 executes the processing of Act 31 in cooperation with the communication interface 24 to thereby operate as a response means for responding the payment method data detected by the detection means to the payment terminal 10 which has sent the inquiry.

According to the payment system 100 having such a configuration, a purchaser is specified by using fingerprint data of the purchaser. According to this method, it is possible to pay money for articles that the purchaser purchases or a service at the stores S1 and S2 with a credit card, electronic money, or a loyalty point card that the purchaser has. In this case, the payment method that the purchaser can use is not limited only to a certain credit card, certain electronic money, or a certain loyalty point card. It is possible to use any payment method of a payment type arbitrarily registered by a purchaser. Therefore, according to the present embodiment, it is possible to provide the payment system 100 that supports a variety of payment methods while specifying a purchaser by using physical characteristics.

By the way, specifically, the inquiry means of the processor 11 of the payment terminal 10 is a means for inquiring of the management server 20 on the basis of the information (store code) identifying the the payment terminal 10 and the fingerprint data (biometric information of purchaser). Meanwhile, the detection means of the processor 21 of the management server 20 is a means for searching the store database 52 by using, as search data, the information (store code) identifying the payment terminal 10 that sent the inquiry, and detecting a payment type linked to information (store code) identifying the payment terminal 10 on the basis of the search result. Further, the detection means is a means for searching the purchaser database 51 by using, as search data, the biometric information of the purchaser, and detecting a payment type in association with the biometric information of the purchaser. Here, it is the fingerprint data inquired by the payment terminal 10. Further, the detection means detects the payment type, the payment type detected from the store database 52 being coincident with the data of the payment type detected from the purchaser database 51. In other words, the detection means is a means for searching the purchaser database 51, which stores payment method data linked to information (store code) identifying the payment terminal 10 in the store database 52. The detection means is also a means for detecting the payment type, which is in association with the fingerprint data inquired by the payment terminal 10, and is linked to the information (store code) identifying the payment terminal 10.

According to the payment system 100 having such a configuration, if the payment types acceptable at the stores S1 and S2 include a payment type preregistered by a purchaser, it is possible to execute payment by using fingerprint authentication. In other words, there is no risk that the payment terminal 10 executes payment processing of a payment type, which is not acceptable at the store S1 or S2 in which the payment terminal 10 is provided. Therefore, a salesclerk or a purchaser at the store S1 or S2 may execute payment without recognizing whether or not the payment types acceptable at the store S1 or S2 include a payment type preregistered by the purchaser.

In addition, even if a payment type acceptable at the store S1 is different from a payment type acceptable at the store S2, the payment system 100 may have the aforementioned operational effects. Therefore, the one payment system 100 is capable of managing multiple stores that accept different payment types, which is advantageous.

Further, the processor 11 of the payment terminal 10 executes the processing of Act 9 to Act 11 of Fig. 6 to thereby operate as a selection means for selecting, if the second obtaining means obtains a plurality of payment method data, one payment method data out of the plurality of payment method data. Further, the processor 11 of the payment terminal 10 executes the processing of Act 12 and Act 13 to thereby operate as a processing means for executing payment processing on the basis of payment data selected by the selection means.

Therefore, if a purchaser registers a plurality of payment types, the purchaser may appropriately select a payment type to be used out of the payment types acceptable at the store. As a result, for example, a purchaser may manage the payment such that the purchaser usually uses payment with electronic money but uses payment with a credit card when the electronic money balance is low. Further, a purchaser may easily manage the payment such that the purchaser selects payment with a loyalty point card when the purchaser has cumulative loyalty points.

The payment system 100 according to an embodiment, which can support a variety of payment methods while specifying a purchaser by using physical characteristics, has been described. However, the embodiment is not limited to this.

In the aforementioned embodiment, an example of the payment system 100, which supports payment methods with credit cards, electronic money, and loyalty point cards, has been described. According to another embodiment, a payment system may support payment methods with credit cards and electronic money, may support payment methods with credit cards and loyalty point cards, and may support payment methods with electronic money and loyalty point cards. Alternatively, a payment system may support a payment method only with credit cards, may support a payment method only with electronic money, or may support a payment method only with loyalty point cards.

If a payment system supports a payment method only with credit cards, only with electronic money, or only with loyalty point cards, payment method data specifying a payment method may not be a pair of a payment type and a purchaser-specific code but only be a purchaser-specific code.

In the aforementioned example of the embodiment, in Act 9 of Fig. 6, if the number of the payment type obtained from a normal response command is one, the processor 11 of the payment terminal 10 proceeds to the processing of Act 12. In Act 12, the processor 11 of the payment terminal 10 obtains the purchaser-specific code included in the payment method data of the normal response command together with the payment type. According to another embodiment, if the number of the payment type obtained from the normal response command is one, the processor 11 displays a screen, which allows a purchaser to confirm whether to accept payment of the payment type, on the display device 17. Then, if selection operation of accepting the payment is input via the input device 16, the processor 11 may proceed to the processing of Act 12. In this case, if selection operation of not accepting the payment is input, for example, payment processing with cash or a cash voucher is to be executed.

In the aforementioned embodiment, fingerprint is described as an example of biometric information, which is physical characteristics. However, the biometric information may not be a fingerprint. As biometric information, an iris, a retina, veins, a face, and the like may be used as a fingerprint.

In the aforementioned example of the embodiment, the payment terminal 10 prestores the terminal control program in the main memory 12 or the secondary memory device 13. The terminal control program may not be prestored in the main memory 12 or the secondary memory device 13. A terminal control program, which is supplied independent of the payment terminal 10, may be written in a writable storage device of the payment terminal 10 depending on operation of a user and the like. The terminal control program recorded in a removable recording medium may be supplied. Alternatively, the terminal control program may be supplied through communication via a network. Any mode of a recording medium such as a CD-ROM or a memory card may be acceptable as long as the recording medium is capable of storing a program and being read by a device. The same applies to the server program of the management server 20.

While certain embodiments have been described, these embodiments have been presented by way of example only, and are not intended to limit the scope of the inventions. Indeed, the novel methods and systems described herein may be embodied in a variety of the other forms; furthermore, various omissions, substitutions and changes in the form the methods and systems described herein may be made without departing from the scope of the inventions. The accompanying claims and their equivalents are intended to cover such forms or modifications as would fall within the scope of the inventions.

## Claims

1. A payment terminal (10) configured to execute payment processing in accordance with payment method data managed by a management server (20), the payment terminal comprising:
a biometric information reader device (110) configured to read biometric information of a purchaser;
a communication interface (14) configured to communicate with the management server;
a storage device (12, 13); and
a processor (11) configured to
obtain the biometric information of the purchaser read by the biometric information reader device,
obtain a terminal identifier information prestored in the storage device, the terminal identifier information being information identifying the payment terminal and a store in which the payment terminal is provided,
send an inquiry command including the obtained biometric information and the terminal identifier information to the management server via the communication interface,
receive a response command from the management server in response to the inquiry command via the communication interface,
obtain payment method data including payment type data for specifying the payment method of the purchaser, the payment method data being included in the response command and linked to the biometric information and the terminal identifier information, and
execute the payment processing in accordance with the payment method specified by the payment type data included in the obtained payment method data.

2. The payment terminal according to Claim 1, wherein
the processor is configured to,
where the processor obtains a plurality of payment method data in the response command,
select one payment method data from the plurality of obtained payment method data, and
execute the payment processing in accordance with a payment method specified by the payment type data included in the one selected payment method data.

3. A payment system (100), comprising:
the payment terminal (10) according to claim 1 or 2; and
a management server (20) configured to manage payment method data for the payment processing,
the management server including
a first database (51) configured to store the payment method data in association with the biometric information of the purchaser,
a second communication interface (24) configured to communicate with the payment terminal, and
a second processor (21) configured to
search, where the second processor receives the inquiry command from the payment terminal via the second communication interface, the first database by using, as search data, the biometric information of the purchaser included in the inquiry command,
detect, as a result of searching the first database, the payment method data in association with the biometric information of the purchaser included in the inquiry command from the payment terminal, and
send the response command to the payment terminal via the second communication interface, the response command including the detected payment method data.

4. The payment system according to Claim 3, wherein
the management server further includes a second database (52) configured to store the payment type data linked to the terminal identifier information, and
the second processor is configured to
search the second database by using, as search data, the terminal identifier information included in the inquiry command,
detect, as a search result of searching the second database, the payment type data linked to the terminal identifier information included in the inquiry command, and
detect, from the payment method data detected as the result of searching the first database, payment method data including payment type data coincident with payment type data detected as the search result of searching the second database.

5. The payment system according to Claim 4, wherein
the second processor is configured to send, where the second processor detects, from the payment method data detected as the result of searching the first database, a plurality of payment method data including the payment type data detected as the search result of searching the second database, the response command to the payment terminal via the second communication interface, the response command including the plurality of detected payment method data, and
the first processor is configured to,
where the first processor obtains the plurality of payment method data included in the response command,
select one payment method data from the plurality of obtained payment method data, and
execute the payment processing in accordance with a payment method specified by the payment type data included in the selected payment method data.

6. A method for controlling a payment terminal (10) configured to execute payment processing in accordance with payment method data managed by a management server (20), the method comprising the steps of:
reading biometric information of a purchaser;
communicating with the management server; and
obtaining the biometric information of the purchaser read in the reading step,
obtaining a terminal identifier information prestored in a storage device of the payment terminal, the terminal identifier information being information identifying the payment terminal and a store in which the payment terminal is provided,
sending an inquiry command including the obtained biometric information and the terminal identifier information to the management server via a communication interface (14),
receiving a response command from the management server in response to the inquiry command via the communication interface,
obtaining payment method data including payment type data for specifying the payment method of the purchaser, the payment method data being included in the response command and linked to the biometric information and the terminal identifier information, and
executing the payment processing in accordance with the payment method specified by the payment type data included in the obtained payment method data.

7. The method according to Claim 6, further comprising the steps of:
where obtaining a plurality of payment method data in the response command in the obtaining payment method data step,
selecting one payment method data from the plurality of obtained payment method data, and
executing the payment processing in accordance with a payment method specified by the payment type data included in the one selected payment method data.

8. A computer program comprising instructions which, when the program is executed by a computer, cause the computer to carry out the steps of the method according to claim 6 or 7.

9. A computer-readable medium having stored thereon the computer program of claim 8.

## Patentansprüche

1. Zahlungsterminal (10), das konfiguriert ist, um eine Zahlungsverarbeitung gemäß Zahlungsverfahrensdaten auszuführen, die von einem Managementserver (20) gemanagt werden, das Zahlungsterminal umfassend:
eine Lesevorrichtung biometrischer Informationen (110), die konfiguriert ist, um biometrische Informationen eines Käufers zu lesen;
eine Kommunikationsschnittstelle (14), die konfiguriert ist, um mit dem Managementserver zu kommunizieren;
eine Speichervorrichtung (12, 13); und
einen Prozessor (11), der zu Folgendem konfiguriert ist
Erlangen der biometrischen Informationen des Käufers, die von der Lesevorrichtung biometrischer Informationen gelesen werden,
Erlangen von Terminalidentifizierungsinformationen, die in der Speichervorrichtung vorgespeichert sind, wobei die Terminalidentifizierungsinformationen Informationen sind, die das Zahlungsterminal und ein Geschäft, in dem das Zahlungsterminal bereitgestellt wird, identifizieren,
Senden eines Abfragebefehls, der die erlangten biometrischen Informationen und die Terminalidentifizierungsinformationen beinhaltet, über die Kommunikationsschnittstelle an den Managementserver,
Empfangen eines Antwortbefehls von dem Managementserver als Reaktion auf den Abfragebefehl über die Kommunikationsschnittstelle,
Erlangen von Zahlungsverfahrensdaten, die Zahlungsartdaten zum Spezifizieren des Zahlungsverfahrens des Käufers beinhalten, wobei die Zahlungsverfahrensdaten in dem Antwortbefehl beinhaltet sind und mit den biometrischen Informationen und den Terminalidentifizierungsinformationen verknüpft sind, und
Ausführen der Zahlungsverarbeitung gemäß dem Zahlungsverfahren, das durch die Zahlungsartdaten spezifiziert ist, die in den erlangten Zahlungsverfahrensdaten beinhaltet sind.

2. Zahlungsterminal nach Anspruch 1, wobei
der Prozessor zu Folgendem konfiguriert ist
wenn der Prozessor in dem Antwortbefehl eine Vielzahl von Zahlungsverfahrensdaten erlangt,
Auswählen eines Zahlungsverfahrens aus der Vielzahl der erlangten Zahlungsverfahrensdaten, und
Ausführen der Zahlungsverarbeitung gemäß einem Zahlungsverfahren, das durch die Zahlungsartdaten spezifiziert wird, die in den einen ausgewählten Zahlungsverfahrensdaten beinhaltet sind.

3. Zahlungssystem (100), umfassend:
das Zahlungsterminal (10) nach Anspruch 1 oder 2; und
einen Managementserver (20), der konfiguriert ist, um Zahlungsverfahrensdaten für die Zahlungsverarbeitung zu managen,
wobei der Managementserver Folgendes beinhaltet
eine erste Datenbank (51), die konfiguriert ist, um die Zahlungsverfahrensdaten in Verbindung mit den biometrischen Informationen des Käufers zu speichern,
eine zweite Kommunikationsschnittstelle (24), die konfiguriert ist, um mit dem Zahlungsterminal zu kommunizieren, und
einen zweiten Prozessor (21), der zu Folgendem konfiguriert ist
Durchsuchen, wenn der zweite Prozessor den Abfragebefehl über die zweite Kommunikationsschnittstelle von dem Zahlungsterminal empfängt, der ersten Datenbank durch Verwenden, als Suchdaten, der in dem Abfragebefehl beinhalteten biometrischen Informationen des Käufers,
Erkennen, als Resultat eines Durchsuchens der ersten Datenbank, der Zahlungsverfahrensdaten in Verbindung mit den biometrischen Informationen des Käufers, die in dem Anfragebefehl von dem Zahlungsterminals beinhaltet sind, und
Senden des Antwortbefehls über die zweite Kommunikationsschnittstelle an das Zahlungsterminal, wobei der Antwortbefehl die erkannten Zahlungsverfahrensdaten beinhaltet.

4. Zahlungssystem nach Anspruch 3, wobei
der Managementserver ferner eine zweite Datenbank (52) beinhaltet, die konfiguriert ist, um die Zahlungsartdaten zu speichern, die mit den Terminalidentifizierungsinformationen verknüpft sind, und
der zweite Prozessor zu Folgendem konfiguriert ist
Durchsuchen der zweiten Datenbank durch Verwenden, als Suchdaten, der Terminalidentifizierungsinformationen, die in dem Abfragebefehl beinhaltet sind,
Erkennen, als Suchresultat eines Durchsuchens der zweiten Datenbank, der Zahlungsartdaten, die mit den Terminalidentifizierungsinformationen verknüpft sind, die in dem Abfragebefehl beinhaltet sind, und
Erkennen, aus den Zahlungsverfahrensdaten, die als Resultat eines Durchsuchens der ersten Datenbank erkannt werden, von Zahlungsverfahrensdaten, die Zahlungsartdaten beinhalten, die mit den Zahlungsartdaten übereinstimmen, die als das Suchresultat eines Durchsuchens der zweiten Datenbank erkannt werden.

5. Zahlungssystem nach Anspruch 4, wobei
der zweite Prozessor konfiguriert ist, um, wenn der zweite Prozessor aus den Zahlungsverfahrensdaten, die als Resultat eines Durchsuchens der ersten Datenbank erkannt werden, eine Vielzahl von Zahlungsverfahrensdaten, die die Zahlungsartdaten beinhalten, die als Suchresultat eines Durchsuchens der zweiten Datenbank erkannt werden, erkennt, den Antwortbefehl über die zweite Kommunikationsschnittstelle an das Zahlungsterminal zu senden, wobei der Antwortbefehl die Vielzahl der erkannten Zahlungsverfahrensdaten beinhaltet, und
der erste Prozessor zu Folgendem konfiguriert ist
wenn der erste Prozessor die Vielzahl von Zahlungsverfahrensdaten erlangt, die in dem Antwortbefehl beinhaltet sind,
Auswählen eines Zahlungsverfahrens aus der Vielzahl der erlangten Zahlungsverfahrensdaten, und
Ausführen der Zahlungsverarbeitung gemäß Zahlungsverfahren, das durch die Zahlungsartdaten spezifiziert wird, die in den ausgewählten Zahlungsverfahrensdaten beinhaltet sind.

6. Verfahren zum Steuern eines Zahlungsterminals (10), das konfiguriert ist, um eine Zahlungsverarbeitung gemäß Zahlungsverfahrensdaten auszuführen, die von einem Managementserver (20) gemanagt werden, das Verfahren umfassend die folgenden Schritte:
Lesen biometrischer Informationen eines Käufers;
Kommunizieren mit dem Managementserver; und
Erlangen der biometrischen Informationen des Käufers, die in dem Leseschritt gelesen werden,
Erlangen von Terminalidentifizierungsinformationen, die in einer Speichervorrichtung des Zahlungsterminals vorgespeichert sind, wobei die Terminalidentifizierungsinformation Informationen sind, die das Zahlungsterminal und ein Geschäft, in dem das Zahlungsterminal bereitgestellt ist, identifizieren,
Senden eines Abfragebefehls, der die erlangten biometrischen Informationen und die Terminalidentifizierungsinformationen beinhaltet, über eine Kommunikationsschnittstelle (14) an den Managementserver,
Empfangen eines Antwortbefehls von dem Managementserver als Reaktion auf den Abfragebefehl über die Kommunikationsschnittstelle,
Erlangen von Zahlungsverfahrensdaten, die Zahlungsartdaten zum Spezifizieren des Zahlungsverfahrens des Käufers beinhalten, wobei die Zahlungsverfahrensdaten in dem Antwortbefehl beinhaltet sind und mit den biometrischen Informationen und den Terminalidentifizierungsinformationen verknüpft sind, und
Ausführen der Zahlungsverarbeitung gemäß dem Zahlungsverfahren, das durch die Zahlungsartdaten spezifiziert ist, die in den erlangten Zahlungsverfahrensdaten beinhaltet sind.

7. Verfahren nach Anspruch 6, ferner umfassend die folgenden Schritte:
bei Erlangen einer Vielzahl von Zahlungsverfahrensdaten in dem Antwortbefehl in dem Schritt eines Erlangens von Zahlungsverfahrensdaten,
Auswählen eines Zahlungsverfahrens aus der Vielzahl der erlangten Zahlungsverfahrensdaten, und
Ausführen der Zahlungsverarbeitung gemäß einem Zahlungsverfahren, das durch die Zahlungsartdaten spezifiziert wird, die in den einen ausgewählten Zahlungsverfahrensdaten beinhaltet sind.

8. Computerprogramm, umfassend Anweisungen, die, wenn das Programm von einem Computer ausgeführt wird, den Computer veranlassen, die Schritte des Verfahrens nach Anspruch 6 oder 7 auszuführen.

9. Computerlesbares Medium, auf dem das Computerprogramm nach Anspruch 8 gespeichert ist.

## Revendications

1. Terminal de paiement (10) configuré de manière à exécuter un traitement de paiement conformément à des données de mode de paiement gérées par un serveur de gestion (20), le terminal de paiement comprenant :
un dispositif de lecture d'informations biométriques (110) configuré de manière à lire des informations biométriques d'un acheteur ;
une interface de communication (14) configurée de manière à communiquer avec le serveur de gestion ;
un dispositif de stockage (12, 13) ; et
un processeur (11) configuré de manière à :
obtenir les informations biométriques de l'acheteur lues par le dispositif de lecture d'informations biométriques ;
obtenir des informations d'identification de terminal pré-stockées dans le dispositif de stockage, les informations d'identification de terminal étant des informations identifiant le terminal de paiement et un magasin dans lequel le terminal de paiement est fourni ;
envoyer une instruction d'interrogation incluant les informations biométriques obtenues et les informations d'identification de terminal obtenues, au serveur de gestion, par l'intermédiaire de l'interface de communication ;
recevoir une instruction de réponse, en provenance du serveur de gestion, en réponse à l'instruction d'interrogation, par l'intermédiaire de l'interface de communication ;
obtenir des données de mode de paiement incluant des données de type de paiement permettant de spécifier le mode de paiement de l'acheteur, les données de mode de paiement étant incluses dans l'instruction de réponse et étant liées aux informations biométriques et aux informations d'identification de terminal ; et
exécuter le traitement de paiement conformément au mode de paiement spécifié par les données de type de paiement incluses dans les données de mode de paiement obtenues.

2. Terminal de paiement selon la revendication 1, dans lequel le processeur est configuré de manière à :
lorsque le processeur obtient une pluralité de données de mode de paiement dans l'instruction de réponse,
sélectionner des données d'un mode de paiement parmi la pluralité de données de mode de paiement obtenues ; et
exécuter le traitement de paiement conformément à un mode de paiement spécifié par les données de type de paiement incluses dans les données du mode de paiement sélectionnées.

3. Système de paiement (100), comprenant :
le terminal de paiement (10) selon la revendication 1 ou 2 ; et
un serveur de gestion (20) configuré de manière à gérer des données de mode de paiement pour le traitement de paiement,
le serveur de gestion incluant :
une première base de données (51) configurée de manière à stocker les données de mode de paiement en association avec les informations biométriques de l'acheteur,
une deuxième interface de communication (24) configurée de manière à communiquer avec le terminal de paiement ; et
un deuxième processeur (21) configuré de manière à :
rechercher, lorsque le deuxième processeur reçoit l'instruction d'interrogation en provenance du terminal de paiement, par l'intermédiaire de la deuxième interface de communication, dans la première base de données, en utilisant, en tant que des données de recherche, les informations biométriques de l'acheteur incluses dans l'instruction d'interrogation,
détecter, en tant qu'un résultat de la recherche dans la première base de données, les données de mode de paiement en association avec les informations biométriques de l'acheteur incluses dans l'instruction d'interrogation, à partir du terminal de paiement, et
envoyer l'instruction de réponse au terminal de paiement, par l'intermédiaire de la deuxième interface de communication, l'instruction de réponse incluant les données de mode de paiement détectées.

4. Système de paiement selon la revendication 3, dans lequel
le serveur de gestion inclut en outre une deuxième base de données (52) configurée de manière à stocker les données de type de paiement liées aux informations d'identification de terminal, et
le deuxième processeur est configuré de manière à :
rechercher dans la deuxième base de données en utilisant, en tant que données de recherche, les informations d'identification de terminal incluses dans l'instruction d'interrogation ;
détecter, en tant qu'un résultat de recherche de la recherche dans la deuxième base de données, les données de type de paiement liées aux informations d'identification de terminal incluses dans l'instruction d'interrogation ; et
détecter, à partir des données de mode de paiement détectées en tant que le résultat de la recherche dans la première base de données, des données de mode de paiement incluant des données de type de paiement coïncidant avec les données de type de paiement détectées en tant que le résultat de recherche de la recherche dans la deuxième base de données.

5. Système de paiement selon la revendication 4, dans lequel
le deuxième processeur est configuré de manière à envoyer, lorsque le deuxième processeur détecte, à partir des données de mode de paiement détectées en tant que le résultat de la recherche dans la première base de données, une pluralité de données de mode de paiement incluant les données de type de paiement détectées en tant que le résultat de recherche de la recherche dans la deuxième base de données, l'instruction de réponse, au terminal de paiement, par l'intermédiaire de la deuxième interface de communication, l'instruction de réponse incluant la pluralité de données de mode de paiement détectées ; et
le premier processeur est configuré de manière à,
lorsque le premier processeur obtient la pluralité de données de mode de paiement incluses dans l'instruction de réponse,
sélectionner des données d'un mode de paiement parmi la pluralité de données de mode de paiement obtenues ; et
exécuter le traitement de paiement conformément à un mode de paiement spécifié par les données de type de paiement incluses dans les données du mode de paiement sélectionnées.

6. Procédé de commande d'un terminal de paiement (10) configuré de manière à exécuter un traitement de paiement conformément à des données de mode de paiement gérées par un serveur de gestion (20), le procédé comprenant les étapes ci-dessous consistant à :
lire des informations biométriques d'un acheteur ;
communiquer avec le serveur de gestion ; et
obtenir les informations biométriques de l'acheteur lues à l'étape de lecture ;
obtenir des informations d'identification de terminal pré-stockées dans un dispositif de stockage du terminal de paiement, les informations d'identification de terminal étant des informations identifiant le terminal de paiement et un magasin dans lequel le terminal de paiement est fourni ;
envoyer une instruction d'interrogation incluant les informations biométriques obtenues et les informations d'identification de terminal obtenues, au serveur de gestion, par l'intermédiaire d'une interface de communication (14) ;
recevoir une instruction de réponse, en provenance du serveur de gestion, en réponse à l'instruction d'interrogation, par l'intermédiaire de l'interface de communication ;
obtenir des données de mode de paiement incluant des données de type de paiement permettant de spécifier le mode de paiement de l'acheteur, les données de mode de paiement étant incluses dans l'instruction de réponse et étant liées aux informations biométriques et aux informations d'identification de terminal ; et
exécuter le traitement de paiement conformément au mode de paiement spécifié par les données de type de paiement incluses dans les données de mode de paiement obtenues.

7. Procédé selon la revendication 6, comprenant en outre les étapes ci-dessous consistant à,
lors de l'obtention d'une pluralité de données de mode de paiement dans l'instruction de réponse à l'étape d'obtention des données de mode de paiement,
sélectionner des données d'un mode de paiement parmi la pluralité de données de mode de paiement obtenues ; et
exécuter le traitement de paiement conformément à un mode de paiement spécifié par les données de type de paiement incluses dans les données du mode de paiement sélectionnées.

8. Programme informatique comprenant des instructions qui, lorsque le programme est exécuté par un ordinateur, amènent l'ordinateur à mettre en oeuvre les étapes du procédé selon la revendication 6 ou 7.

9. Support lisible par ordinateur sur lequel est stocké le programme informatique selon la revendication 8.
